(19) **Europäisches Patentamt**

**European Patent Office**

**Office européen des brevets**

(11) **EP 1 550 586 B1**

(12) **FASCICULE DE BREVET EUROPEEN**

(45) Date de publication et mention
de la délivrance du brevet:
**23.08.2006 Bulletin 2006/34**

(51) Int Cl.:
***B60R 21/01*** *(2006.01)*

(21) Numéro de dépôt: **04300855.6**

(22) Date de dépôt: **08.12.2004**

(54) **Procédé et dispositif de prévision de chocs d'un véhicule**

Verfahren und Vorrichtung zur Vorraussage von Zusammenstö en eines Fahrzeuges

Method and device for predicting collisions of a vehicle

(84) Etats contractants désignés:
**AT BE BG CH CY CZ DE DK EE ES FI FR GB GR HU IE IS IT LI LT LU MC NL PL PT RO SE SI SK TR**

(30) Priorité: **30.12.2003 FR 0315548**

(43) Date de publication de la demande:
**06.07.2005 Bulletin 2005/27**

(73) Titulaire: **Renault s.a.s.**
**92100 Boulogne Billancourt (FR)**

(72) Inventeurs:
• **Capperon, Stéphane**
**92500 Rueil Malmaison (FR)**
• **Wakim, Christophe**
**75007 Paris (FR)**

(56) Documents cités:
**EP-A- 1 094 336       EP-A- 1 298 012**
**EP-A- 1 367 410       US-A- 5 936 549**

• **EWALD A ET AL: "Laser scanners for obstacle detection in automotive applications" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA, IEEE, US, 3 octobre 2000 (2000-10-03), pages 682-687, XP010529017 ISBN: 0-7803-6363-9**

**Description**

La présente invention relève du domaine de la prévision de chocs d'un véhicule automobile avec un corps mobile, en particulier un piéton ou une bicyclette.

On connaît des dispositifs de capot actif ou de coussins gonflables pour piétons disposés à l'avant d'un véhicule et pourvus d'un capteur de contact permettant de déclencher le gonflement d'un coussin gonflable.

EP-A-1 367 410 révèle un procédé et système de prévision de chocs d'un véhicule et d'un corps mobile, et on estime l'espace occupé par le corps mobile au cours du temps.

La demanderesse s'est aperçu que pour améliorer la sécurité des piétons, il convenait de s'intéresser à une prévision de chocs permettant ensuite d'agir pour éviter le choc ou réduire les conséquences du choc. On a ainsi moins de contraintes par rapport à la durée de déclenchement de systèmes de protection, et on peut alors prendre des mesures pour réduire la gravité du choc ou encore tenter une manoeuvre d'évitement.

L'invention propose une prévision de chocs d'un véhicule et d'un corps mobile, tel qu'un piéton, dans un but de protection du corps mobile.

Le procédé de prévision de chocs d'un véhicule et d'un corps mobile, selon un aspect de l'invention, comprend des étapes de modélisation du comportement spatio-temporel du corps mobile à partir d'une pluralité d'états dudit corps mobile définis par une durée minimale, une durée de transition, une vitesse moyenne et un écart type, une probabilité de changement d'état et une probabilité de changement de direction, et une étape d'estimation de l'espace occupé par le corps mobile au cours du temps. On tient compte ainsi du comportement du corps mobile qui est susceptible de changer de direction et de vitesse.

Dans un mode de réalisation de l'invention, on estime l'espace occupé par le corps mobile au cours du temps en fonction d'un modèle de comportement et d'un modèle d'encombrement du corps mobile.

Dans un mode de réalisation de l'invention, les états de corps mobile comprennent une vitesse maximale et une vitesse minimale.

Avantageusement, on modélise l'encombrement du corps mobile.

Dans un mode de réalisation de l'invention, on calcule une cartographie des positions possibles occupées par le corps mobile à un instant donné.

Dans un mode de réalisation de l'invention, on calcule une cartographie de la probabilité de présence du corps mobile à un instant donné.

L'invention concerne également un système de prévision de chocs d'un véhicule et d'un corps mobile, ledit système comprenant un module d'estimation du déplacement du corps mobile et un module d'estimation du risque de collision comprenant un modèle de comportement spatio-temporel du corps mobile, pourvu d'une pluralité d'états de corps mobile définis par une durée minimale, une durée de transition, une vitesse moyenne et un écart type, une probabilité de changement d'état et une probabilité de changement de direction, pour estimer l'espace occupé par ledit corps mobile au cours du temps à partir du modèle de comportement.

Dans un mode de réalisation de l'invention, l'estimateur effectue une estimation probabiliste de l'espace occupé par ledit corps mobile au cours du temps. L'estimateur peut être pourvu d'une unité de calcul.

Avantageusement, le système comprend, en outre, un élément de détection de corps mobile.

Dans un mode de réalisation de l'invention, le module d'estimation comprend, en outre, un modèle d'encombrement du corps mobile. L'estimateur peut prendre en compte le modèle d'encombrement.

Les états de corps mobile peuvent comprendre une vitesse maximale et une vitesse minimale. L'estimateur peut être capable à partir du modèle d'encombrement et du modèle de comportement de calculer une cartographie des positions possibles occupées par le corps mobile à un instant donné. L'estimateur peut être capable à partir du modèle d'encombrement et du modèle de comportement de calculer une cartographie de la probabilité de présence du corps mobile à un instant donné. Le module d'estimation peut comprendre, en outre, un générateur de nombre aléatoire. Le corps mobile est distinct du véhicule et sera en général un piéton mais pourra également être l'ensemble constitué par un cycliste et une bicyclette.

L'invention permet de tenir compte du comportement du piéton et d'évaluer la probabilité d'un choc avec ledit piéton en vue d'une action qui peut être un avertissement adressé au conducteur et/ou au piéton, le déclenchement d'un dispositif de protection, tel qu'un coussin gonflable, destiné à éviter un choc entre une partie dure du véhicule et le piéton, à déclencher un freinage d'urgence du véhicule ou encore à déclencher une manoeuvre d'évitement. On parvient ainsi à réduire le nombre d'accidents et les dommages causés par les accidents subsistants.

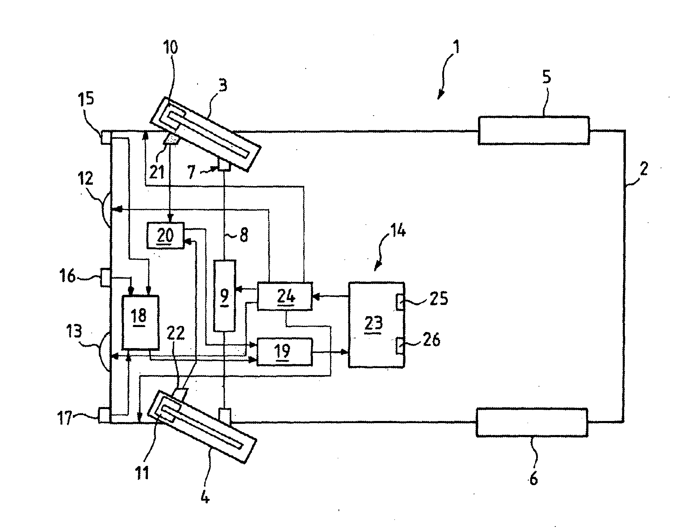

La présente invention sera mieux comprise à l'étude de la description détaillée d'un mode de réalisation pris à titre d'exemple non limitatif et illustré par le dessin annexé, qui est une vue schématique de dessus d'un véhicule équipé d'un système selon un aspect de l'invention.

Comme on peut le voir sur la figure unique, le véhicule 1 comprend un châssis 2, des roues avant 3 et 4 et des roues arrière 5 et 6, les roues étant reliées au châssis 2 par un mécanisme de suspension, non représenté.

Le véhicule 1 est pourvu d'un système de direction 7 comprenant une crémaillère 8 disposée entre les roues avant 3 et 4, un actionneur de crémaillère 9 apte à orienter les roues avant 3 et 4 par l'intermédiaire de la crémaillère 8, en fonction d'ordres reçus, de façon mécanique ou électrique, en provenance d'un volant de direction, non représenté, à disposition d'un conducteur du véhicule. Des mécanismes de freins à disques 10 et 11 sont disposés dans les roues avant 3 et 4. Les roues arrière 5 et 6 peuvent être équipées de mécanismes similaires.

Le véhicule 1 est équipé sur l'avant du châssis 2 de deux coussins gonflables 12 et 13, destinés à la protection des piétons ou des cyclistes et dont le déclenchement sera expliqué ci-après. Le véhicule 1 comprend en effet un système de prévision de chocs, référencé 14 dans son ensemble, comprenant une pluralité de détecteurs de présence 15, 16 et 17, disposés à l'avant du châssis 2 du véhicule 1, pour détecter à distance la présence d'un piéton ou d'un cycliste. Les capteurs 15 à 17 peuvent être du type optique, thermique, acoustique, à ultrasons, ou encore de type radar, pour connaître à distance avec une certaine précision la position d'un piéton voisin du véhicule, par exemple à une distance de l'ordre de quelques dizaines de centimètres à quelques mètres. De façon non représentée, on peut prévoir des détecteurs du même type, disposés latéralement.

Le système de prévision 14 comprend un module 18 de gestion des capteurs 15 à 17, recevant des données en provenance desdits capteurs 15 à 17, calculant la position du piéton ou du cycliste par rapport au véhicule 1 et envoyant l'information de position à un module 19 de classement d'obstacles, recevant également une information relative à la vitesse du véhicule en provenance d'un module 20, lui-même relié à des capteurs de vitesse 21 et 22 disposés dans les roues 3 et 4. Les capteurs de vitesse 21 et 22 envoient un signal de vitesse au module 20 qui peut être une unité de commande de système anti-blocage de roues. Le module 20 élabore un signal de vitesse et l'envoie au module de classement 19.

A partir des données de position du piéton ou du cycliste et des données de vitesse du véhicule, le module de classement 19 calcule la vitesse du piéton et sa direction et élabore un placement du piéton en quatre états possibles : immobilité, marche, course à faible allure du type jogging, course à allure élevée, et envoie en sortie les données de classement, de position et de vitesse à un module 23 d'estimation du risque de collision qui envoie ladite estimation à un module de commande 24 d'actionneurs. Le module de commande 24, en fonction du risque estimé par le module 23, peut mettre en oeuvre différents actionneurs, par exemple un avertisseur sonore, non représenté, les coussins gonflables 12 et 13, les freins 10 et 11 auquel le module de commande 24 est relié de façon non représentée pour la clarté du dessin, ou encore le système de direction 7 pour tenter une manoeuvre d'évitement.

Le module 19 établit la position et la vitesse du piéton dans un repère, par exemple un repère orthonormé direct dans un espace plan, la position verticale du piéton n'étant en général pas un facteur primordial. Le piéton peut être modélisé par son cercle circonscrit représentatif de l'encombrement dudit piéton, le centre du cercle circonscrit passant par le centre de gravité du piéton et son orientation étant définie par un angle $\alpha$. La modélisation 25 du piéton peut être stockée dans le module 23. Bien entendu, on peut prévoir une modélisation plus fine du piéton, par exemple par une ellipse au lieu du cercle, l'ellipse dépendant de l'angle a et les dimensions de l'ellipse pouvant dépendre de la vitesse du piéton. On considère donc que la direction de déplacement du piéton est égale à son orientation $\alpha$, ce qui revient à supposer que le piéton marche droit et n'effectue pas de marche à reculons ou de pas latéraux.

Le module 23 d'estimation du risque de collision comprend un modèle de comportement 26 spatio-temporel du piéton, alimenté par la position, et la vitesse du piéton, et la vitesse du véhicule. Le modèle de comportement 26 comprend des lois de transition et de maintien d'états du corps mobile et permet d'estimer l'espace occupé par ledit corps mobile au cours du temps à partir du modèle de comportement.

La norme de la vitesse du piéton est notée V. Le module 23 classe le piéton dans un état appartenant à l'un des quatre états cinématiques du piéton. L'état cinématique donne une bonne description qualitative sur la norme de vitesse du piéton et ses limites, ce qui ne signifie pas que la vitesse du piéton ne prend qu'un nombre fini de valeurs. Les états cinématiques sont discrets et finis, et la vitesse évolue de manière continue dans le temps, les grandeurs a et V sont des fonctions continues par rapport au temps. Le système à états cinématiques discrets du piéton permet une simplification et une formalisation des comportements du piéton. On considère qu'un piéton est une personne qui se tient debout et qui peut être immobile, marcher, courir à faible allure, ou courir à allure élevée. La position du piéton peut être calculée par intégration sur le temps du vecteur vitesse à condition de connaître la position précédente.

Le tableau suivant détermine les états de piéton et les intervalles de vitesse correspondants :

|  | Etat S(t) | Vitesse moyenne (m/s) | Ecart type (m/s) | Vitesse minimale (m/s) | Vitesse maximale (m/s) |
|---|---|---|---|---|---|
| Immobile | 1 | 0 | 0,04 | 0 | 0,15 |
| Marcher | 2 | 1,4 | 0,25 | 0,7 | 2,1 |
| Jogging | 3 | 3,5 | 0,4 | 2,5 | 4,5 |
| Courir | 4 | 6 | 0,5 | 5 | 8 |

Une fois connue, la norme de vitesse est tirée aléatoirement. Il s'agit d'une réalisation de la vitesse considérée comme une distribution normale avec pour moyenne et écart type les valeurs correspondant à l'état dans lequel est le piéton, et en imposant une contrainte supplémentaire avec les vitesses limites, minimale et maximale.

La durée minimale dans un état est définie en supposant qu'une fois qu'il a atteint un état, le piéton y reste pendant une certaine durée, estimée à 0,5 seconde pour l'état immobile et de marche, à 1 seconde pour la course lente, et à 1,5 seconde pour la course rapide.

En outre, le module 23 prévoit des temps de transition qui sont nécessaires au passage d'un état à l'autre, et estimés à 1 seconde pour un changement vers un état adjacent, par exemple de l'immobilité vers la marche ou de la marche vers la course lente, à environ 1,5 seconde pour un changement vers un état non adjacent, par exemple de l'état immobile au jogging.

Le module 23 prend également en compte les durées de changement de direction considérées comme simultanées au changement d'état lorsqu'il s'agit d'un mouvement et estimées à 1 seconde pour $\pi$ radians pour un changement de direction à l'état immobile.

En outre, on considère que la course rapide ne peut être atteinte qu'à partir de l'état de course lente et qu'un ralentissement de la course lente aboutit à l'état de marche et ne peut atteindre directement l'état d'immobilité.

Le module 23 peut également prendre en compte le fait qu'un arrêt avec passage de la marche à l'état immobile peut être légèrement plus bref que la transition inverse, par exemple environ 0,5 seconde.

Le module 23 tient également compte de l'évolution probabiliste de l'allure en estimant la probabilité qu'a un piéton de changer d'état à la fin du cycle d'état actuel. La probabilité de changement d'état est estimée dans le tableau suivant :

| Etat $S_{i+1}$ Etat $S_i$ | Immobile | Marcher | Jogging | Courir |
|---|---|---|---|---|
| Immobile | 0,95 | 0,04 | 0,01 | 0 |
| Marcher | 0,09 | 0,9 | 0,01 | 0 |
| Jogging | 0 | 0,07 | 0,85 | 0,08 |
| Courir | 0 | 0 | 0,15 | 0,85 |

L'utilisation des quatre états du piéton pour décrire l'allure du piéton permet de simplifier la représentation de cette donnée qualitative. On peut également prendre en compte la probabilité pour un piéton de changer son orientation alpha en fonction de l'état dans lequel il se trouve. Le changement de direction est considéré discret au premier ordre et défini de manière analogue à la représentation directe de l'allure. On considère qu'il y a huit changements de direction principaux par tranches de $\pi/4$ radians estimées d'après le tableau ci-dessous.

| | Changement d'angle $\delta$ (rad) | 0 | $\pi/4$ | $\pi/2$ | $3\pi/4$ | $\pi$ |
|---|---|---|---|---|---|---|
| Immobile | Probabilité | 0,6 | 0,17 | 0,12 | 0,08 | 0,03 |
| Marcher | Probabilité | 0,7 | 0,2 | 0,1 | 0 | 0 |
| Jogging | Probabilité | 0,85 | 0,15 | 0 | 0 | 0 |
| Courir | Probabilité | 0.9 | 0,1 | 0 | 0 | 0 |

De même que pour l'évolution de la norme de vitesse, on suppose que le changement d'angle est continu par rapport au temps et qu'il peut prendre toutes les valeurs de 0 à $2\pi$. Une fois la direction principale obtenue, une réalisation aléatoire de l'angle est tirée. La distribution est supposée normale, centrée sur l'angle correspondant à la direction principale, avec un écart type donné, typiquement $\pi/12$ radians.

La probabilité pour un piéton se trouvant dans un premier état de passer dans un second état avec un changement de direction principale d'un angle $\delta$ est égale au produit de la probabilité de passage du premier vers le deuxième état par la probabilité d'un changement de direction de valeur absolue $\delta$ dans le second état par la probabilité sur la valeur du signe de l'angle de changement de direction qui peut être supposé uniforme et égal à 50% ou en variante corrélé au caractère droitier ou gaucher du piéton, marquant une préférence pour tourner à gauche ou à droite, respectivement.

On peut ainsi générer une trajectoire de piéton en appliquant les règles suivantes. Le piéton commence avec un état, une norme de vitesse et une direction donnée. Pour chaque pas de simulation, on met à jour la position, la norme de vitesse, et la direction, on recalcule le changement de direction, de norme de vitesse et d'état si nécessaire et on passe à l'incrément suivant. Les évolutions de norme de vitesse et d'angle sont linéaires pendant le temps de cycle donné.

A titre d'exemple, un piéton est détecté comme marchant, S(t)=2, à la vitesse V(t)=1,5 m/s$^{-1}$, par la direction définie par α(t)=1,2 radian, à l'instant t. Le module 23 comprend un générateur de nombre aléatoire et calcule le prochain état par tirage d'un nombre aléatoire, selon la loi donnée dans le tableau ci-dessus : « Marcher », puisque S(t)=2. On obtient ainsi l'état suivant : S'=3. Grâce au tableau de durée de cycles, on obtient le temps de passage de S à S', $T_{SS'}$=1seconde.

Pour obtenir la vitesse voulue à l'instant t+$T_{SS'}$, on tire un autre nombre aléatoire selon une loi normale avec la moyenne et l'écart type de l'état S' et bornée par les limites de vitesse de l'état S', voir le premier tableau, et on obtient V(t+$T_{SS}$)= 3 m/s$^{-1}$ La norme de la vitesse évolue de façon linéaire de t à T+$T_{SS'}$, avec :

$$V(u) = \frac{V(t + T_{SS'}) - V(t)}{T_{SS'}}(u - t) + V(t), \text{ pour } u \in \left[t, t + T_{SS'}\right]$$

Le changement de direction δ est obtenu de manière similaire en tirant un nombre pour savoir si le piéton ira à gauche ou à droite, puis en tirant un nombre pour le changement d'angle principal et enfin en tirant un nombre pour donner la nouvelle direction à atteindre à l'instant t+$T_{SS'}$. L'évolution de l'angle α est également considérée comme linéaire de t à t+$T_{SS'}$.

A partir des conditions initiales, de l'intervalle de prédiction et du nombre de points simulés, il est possible de prédire les positions à venir du piéton. Le résultat peut être exploité de différentes façons : en prenant le centre d'un nuage de points, les dimensions caractéristiques, l'enveloppe, une partition de l'ensemble des points en nuages homogènes, ou encore une estimation de la densité de probabilité de présence du piéton associée à chaque zone de l'espace.

Selon le même principe que pour la génération de trajectoire, on peut générer un ensemble de trajectoires pour chacun des deux mobiles, le véhicule et le piéton, ou plus généralement le corps mobile, et d'évaluer la probabilité de choc. En cas d'intersection ou de frôlement des trajectoires, pour tenir compte de l'aspect non ponctuel des objets mobiles en cause, on vérifie si une correspondance temporelle se produit. En effet, il ne suffit pas que les trajectoires soient proches ou se coupent, il faut que les deux objets mobiles soient tous les deux dans le même voisinage au même instant. On peut donc en déduire une probabilité de choc. A partir de la probabilité de choc, fournie par le module 23, le module 24 élabore une réaction sous la forme d'ordre de commande destiné aux actionneurs adéquats.

Bien entendu, on peut prévoir que certains paramètres ne soient pas mesurés mais simplement estimés ou calculés à partir d'autres paramètres, et ce pour des raisons d'économie.

Le système permet ainsi de tenir compte du fait que le mouvement d'un piéton est composé d'une succession de pas, le piéton devant donc finir le mouvement en cours avant de passer à l'action suivante. La modélisation est donc fidèle au comportement réel d'un piéton qui, à une échelle de quelques centièmes de seconde, ne changera pas brusquement de direction alors qu'il est au milieu d'une foulée. La modélisation tient compte de la corrélation entre les accélérations longitudinales et latérales et permet de modéliser différentes trajectoires de piéton. A cet égard, on peut prévoir d'incorporer dans le module 23 un modèle 26 de trajectoire de piéton permettant d'effectuer une prédiction de trajectoire et pouvant être renseigné à partir d'études de trajectoire réellement constatées.

En d'autres termes, le système de prévision de chocs comprend une partie de détection apte à détecter et classer les obstacles en différentes catégories, piétons, autres véhicules mobiles, obstacles fixes, qui fournit des informations sur la position et la vitesse du piéton, une partie de prédiction qui évalue les risques de collision en calculant les trajectoires à venir du véhicule équipé et du piéton et une partie de commande apte à donner l'ordre de déclencher les systèmes de protection active, tels que les coussins gonflables pour piétons, les freins pour un freinage d'urgence susceptible de réduire la vitesse du véhicule en partie ou en totalité, une alerte du conducteur ou du piéton, ou encore le système de direction pour une tentative d'évitement par déviation de la direction du véhicule.

On modélise ainsi de façon réaliste le piéton qui est susceptible de changer de vitesse, de s'arrêter, de redémarrer. La forme de cette trajectoire est indépendante du pas temporel de simulation et on prend en compte des valeurs d'accélération réalistes.

## Revendications

1. Procédé de prévision de chocs d'un véhicule et d'un corps mobile, dans lequel on modélise le comportement spatio-temporel du corps mobile à partir d'une pluralité d'états de corps mobile définis par une durée minimale, une durée de transition, une vitesse moyenne, et un écart type, une probabilité de changement d'état, et une probabilité de changement de direction, et on estime l'espace occupé par le corps mobile au cours du temps.

2. Procédé selon la revendication 1, dans lequel on estime l'espace occupé par le corps mobile au cours du temps en fonction du modèle de comportement et d'un modèle d'encombrement du corps mobile.

3. Procédé selon la revendication 1 ou 2, dans lequel les états de corps mobile comprennent une vitesse maximale et une vitesse minimale.

4. Procédé selon l'une quelconque des revendications précédentes, dans lequel on modélise l'encombrement du corps mobile.

5. Procédé selon l'une quelconque des revendications précédentes, dans lequel on calcule une cartographie des positions possibles occupées par ledit corps mobile à un instant donné.

6. Procédé selon l'une quelconque des revendications précédentes, dans lequel on calcule une cartographie de la probabilité de présence dudit corps mobile à un instant donné.

7. Système de prévision de chocs (14) d'un véhicule et d'un corps mobile, **caractérisé par le fait que** ledit système comprend un module d'estimation (19) du déplacement du corps mobile, un module (23) d'estimation du risque de collision comprenant un modèle de comportement (26) spatio-temporel du corps mobile, pourvu d'une pluralité d'états de corps mobiles définis par une durée minimale, une durée de transition, une vitesse moyenne et un écart type, une probabilité de changement d'état et une probabilité de changement de direction, pour estimer l'espace occupé par ledit corps mobile au cours du temps à partir du modèle de comportement.

8. Système selon la revendication 7, **caractérisé par le fait que** le système comprend, en outre, un élément de détection (15) de corps mobile.

9. Système selon la revendication 7 ou 8, **caractérisé par le fait que** le module d'estimation (23) comprend, en outre, un modèle d'encombrement (25) du corps mobile.

10. Système selon la revendication 7, 8 ou 9, **caractérisé par le fait que** le module d'estimation (23) comprend, en outre, un générateur de nombre aléatoire.


**Claims**

1. Method for predicting impacts of a vehicle and a movable body, in which the spatial-temporal behaviour of the movable body is modelled from a plurality of movable body states defined by a minimum duration, a transition duration, an average speed, and a standard deviation, a probability of change of state, and a probability of change of direction, and the space occupied by the movable body is measured over time.

2. Method according to Claim 1, in which the space occupied by the movable body is estimated over time as a function of the behaviour model and a model of the bulk of the movable body.

3. Method according to Claim 1 or 2, in which the states of the movable body comprise a maximum speed and a minimum speed.

4. Method according to any one of the preceding claims, in which the bulk of the movable body is modelled.

5. Method according to any one of the preceding claims, in which a mapping of the possible positions occupied by the said movable body at a given moment is computed.

6. Method according to any one of the preceding claims, in which a mapping of the probability of the presence of the said movable body at a given moment is computed.

7. System of foreseeing impacts (14) of a vehicle and a movable body, **characterized in that** the said system comprises a module (19) for estimating the movement of the movable body, a module (23) for estimating the risk of collision comprising a model (26) of the spatial-temporal behaviour of the movable body, provided with a plurality of movable body states defined by a minimum duration, a transition duration, an average speed and a standard deviation, a probability of change of state and a probability of change of direction, to estimate the space occupied by the said movable body over time from the behaviour model.

**8.** System according to Claim 7, **characterized in that** the system also comprises an element (15) for detecting the movable body.

**9.** System according to Claim 7 or 8, **characterized in that** the estimation module (23) also comprises a model (25) of the bulk of the movable body.

**10.** System according to Claim 7, 8 or 9, **characterized in that** the estimation module (23) also comprises a random number generator.

**Patentansprüche**

**1.** Verfahren zur Prognose von Zusammenstößen zwischen einem Fahrzeug und einem beweglichen Körper, bei dem das raumzeitliche Verhalten des beweglichen Körpers ausgehend von mehreren Zuständen eines beweglichen Körpers modellisiert wird, die durch eine minimale Dauer, eine Übergangsdauer, eine mittlere Geschwindigkeit, und eine Standardabweichung, eine Zustandsänderungswahrscheinlichkeit, und eine Richtungsänderungswahrscheinlichkeit definiert sind, und der vom beweglichen Körper im Lauf der Zeit eingenommene Raum geschätzt wird.

**2.** Verfahren nach Anspruch 1, bei dem der vom beweglichen Körper im Lauf der Zeit eingenommene Raum in Abhängigkeit vom Verhaltensmodell und von einem Raumbedarfsmodell des beweglichen Körpers geschätzt wird.

**3.** Verfahren nach Anspruch 1 oder 2, bei dem die Zustände des beweglichen Körpers eine maximale Geschwindigkeit und eine minimale Geschwindigkeit enthalten.

**4.** Verfahren nach einem der vorhergehenden Ansprüche, bei dem der Raumbedarf des beweglichen Körpers modellisiert wird.

**5.** Verfahren nach einem der vorhergehenden Ansprüche, bei dem eine Kartographie der möglichen Positionen berechnet wird, die vom beweglichen Körper in einem gegebenen Zeitpunkt eingenommen werden.

**6.** Verfahren nach einem der vorhergehenden Ansprüche, bei dem eine Kartographie der Anwesenheitswahrscheinlichkeit des beweglichen Körpers in einem gegebenen Zeitpunkt berechnet wird.

**7.** Systeme zur Prognose von Zusammenstößen (14) zwischen einem Fahrzeug und einem beweglichen Körper, **dadurch gekennzeichnet, dass** das System einen Schätzmodul (19) der Bewegung des beweglichen Körpers und einen Schätzmodul (23) der Kollisionsgefahr aufweist, der ein raumzeitliches Verhaltensmodell (26) beweglicher Körper enthält, das mit mehreren Zuständen von beweglichen Körpern versehen ist, die durch eine minimale Dauer, eine Übergangsdauer, eine mittlere Geschwindigkeit und eine Standardabweichung, eine Zustandsänderungswahrscheinlichkeit und eine Richtungsänderungswahrscheinlichkeit definiert sind, um den vom beweglichen Körper im Laufe der Zeit eingenommenen Raum ausgehend vom Verhaltensmodell zu schätzen.

**8.** System nach Anspruch 7, **dadurch gekennzeichnet, dass** das System außerdem ein Erfassungselement (15) eines beweglichen Körpers aufweist.

**9.** System nach Anspruch 7 oder 8, **dadurch gekennzeichnet, dass** der Schätzmodul (23) außerdem ein Raumbedarfsmodell (25) des beweglichen Körpers aufweist.

**10.** System nach Anspruch 7, 8 oder 9, **dadurch gekennzeichnet, dass** der Schätzmodul (23) außerdem einen Zufallszahlgenerator aufweist.

EP 1 550 586 B1

8